# FASCICULE DE BREVET EUROPEEN

(11) **EP 2 810 049 B1**
(45) Date de publication et mention de la délivrance du brevet: **02.04.2025**
(21) Numéro de dépôt: 13704184.4
(22) Date de dépôt: 21.01.2013
(51) Int. Cl.: G01N 21/55, G02B 9/06

(54) **SYSTÈME OPTIQUE DESTINÉ À MESURER LA BRDF, BSDF ET BDTF**
OPTISCHES SYSTEM ZUR MESSUNG VON BRDF, BSDF UND BDTF
OPTICAL SYSTEM INTENDED TO MEASURE BRDF, BSDF AND BDTF

(30) Priorité: 31.01.2012 FR 1250886
(43) Date de publication de la demande: 10.12.2014
(73) Titulaire: Lauret, Jean-Pierre, 01100 Oyonnax (FR)
(72) Inventeur: Lauret, Jean-Pierre, 01100 Oyonnax (FR)
(74) Mandataire: Germain Maureau
(86) Numéro de dépôt international: PCT/FR2013/050126
(87) Numéro de publication internationale: WO 2013/114022

(56) Documents cités:
- EP-A2- 0 294 643
- FR-A- 1 183 489
- FR-A- 1 290 246
- FR-A- 1 459 307
- FR-A- 1 460 885
- FR-A- 1 467 132
- FR-A1- 2 749 388
- US-A- 6 118 474

## Description

La présente invention concerne un système optique, destiné à mesurer les fonctions de réflexion et/ou de transmission diffuse bidirectionnelle BRDF, BTDF et BSDF d'une surface réfléchissante et/ou fonctionnant en transmission d'au moins une partie d'un objet. Par ailleurs, la présente invention concerne également un dispositif de mesure de l'intensité lumineuse d'une surface réfléchissante et/ou fonctionnant en transmission d'au moins une partie d'un objet.

Traditionnellement, les fonctions de réflexion diffuse bidirectionnelle, BRDF (acronyme anglais 'bidirectional reflectance distribution function') ou de transmission diffuse bidirectionnelle BTDF (acronyme anglais 'bidirectional transmittance distribution function') ou la fonction de diffusion bidirectionnelle BSDF (acronyme anglais 'bidirectional scattering distribution function', la BSDF regroupe la BRDF et la BTDF en une seule fonction) sont mesurées avec un goniomètre deux axes. L'intensité de la lumière diffusée est mesurée point par point avec un bras articulé de grandes dimensions et mobile dans toutes les directions de l'espace. En conséquence, plusieurs heures sont nécessaires pour réaliser une mesure complète. De plus, le goniomètre deux axes est encombrant, lourd et difficilement transportable. Il n'est utilisé qu'en laboratoire et n'est pas adapté à la mesure sur site.

Il semble donc opportun de proposer un système de mesure des BRDF, BTDF et BSDF à double conjugaison qui soit compact, sans partie en mouvement, moins onéreux, et dont la mesure est rapide.

Le document FR2860869 (J.Delacour - OPTIS) décrit un dispositif de mesure de l'intensité lumineuse d'un objet qui comprend une partie centrale dioptrique par exemple consitutée par une lentille asphérique convergente et d'une partie périphérique catadioptrique telle qu'un réflécteur parabolique percé en son sommet. La lentille asphérique convergente et le réflécteur parabolique sont agencés de sorte que leurs axes optiques H et leur foyers F1 sont confondus. L'objet dont l'intensité lumineuse ou BRDF, BTDF ou BSDF à mesurer est placé à ce foyer F1. La lumière diffusée par l'objet est collectée soit par la lentille asphérique convergente (lorsque les rayons lumineux sont faiblement inclinés par rapport à l'axe optique H), soit par le réflecteur parabolique (lorsque les rayons lumineux sont fortement inclinés par rapport à l'axe optique H). La limite entre faiblement incliné et fortement incliné se situe au voisinage de 30 degrés d'angle.Ainsi le document FR2860869 décrit un dispositif de mesure moins encombrant que le goniomètre mais ce dispositif ne permet pas d'obtenir une bonne résolution notamment aux grands angles de diffusion car il est conçu autour d'un objet ponctuel et il ne prend pas en compte toutes les aberrations d'ouverture (coma) et les aberrations de champ (courbure de champ). Une conséquence est que la résolution n'est pas constante selon l'angle de la mesure effectuée. De plus, la discontinuité entre la lentille et le reflécteur parabolique créée un artefact qui perturbe la mesure.

Le document FR2749388 (T.Leroux - ELDIM) décrit un appareil de mesure de BRDF qui est limité à un faible angle de champ. En effet, l'objectif de mesure réalise la transformée de Fourier ce qui implicitement induit une bonne correction des aberrations d'ouverture et des aberrations de champ mais le fait que le diamètre du faisceau de lumière présente toujours la même section quel que soit l'angle considéré limite l'angle d'ouverture à 40°. Ceci implique que la somme des angles de la lumière incidente et de la lumière diffusée n'excède pas l'angle d'ouverture de l'objectif de mesure, soit 40°. Par conséquent les surfaces dont l'angle de diffusion dépasse 40°, notamment les surfaces très diffuses, ne sont pas mesurables avec ce dispositif.

Un des buts de l'invention est de pallier à un ou plusieurs de ces inconvénients. A cet effet, et selon un premier aspect, l'invention a pour objet un système optique, destiné à mesurer les fonctions BRDF, BTDF et BSDF diffuse bidirectionnelle d'une surface réfléchissante et/ou fonctionnant en transmission d'au moins une partie d'un objet, le système comprenant successivement dans la direction de propagation de la lumière diffusée :
- un objectif aplanétique apte à projeter l'image d'un diagramme d'intensité de la lumière diffusée par la surface réfléchissante et/ou fonctionnant en transmission sur un plan P d'observation intermédiaire en aval de l'objectif aplanétique,
- une lentille de champ convergente en aval du plan P,
- un objectif de prise d'image dont l'angle de champ est supérieur ou égal à l'angle de convergence des faisceaux de la lumière diffusée émergeants de la lentille de champ, et
- un capteur vidéo,
l'objectif aplanétique, la lentille de champ convergente, l'objectif de prise d'image et le capteur vidéo étant agencés de sorte à permettre une première conjugaison entre la surface réfléchissante et/ou fonctionnant en transmission et la pupille d'entrée de l'objectif de prise d'image et une deuxième conjugaison entre un diagramme d'intensité de la lumière diffusée et le capteur vidéo.

Ainsi, cette configuration permet l'obtention d'une image nette d'un diagramme d'intensité de la lumière diffusée grâce aux deux conjugaisons obtenues par le système, lorsque la mise au point de l'objectif de prise d'image est réalisée.

On entend par 'objectif aplanétique' un objectif ayant une résolution angulaire comprise entre 10° et une valeur strictement supérieure à 0° et de préférence comprise entre 5° et une valeur strictement supérieure à 0° et de préférence encore comprise entre 1° et une valeur strictement supérieure à 0° de sorte que la correction des aberrations d'ouverture est adaptée à la résolution angulaire de la mesure.

Lorsque l'objectif est rigoureusement aplanétique (ou dont la résolution angulaire est comprise 1° et une valeur strictement supérieure à 0°), les aberrations d'ouverture de la première conjugaison sont corrigées. Ainsi l'aberration sphérique est corrigée à tous les ordres et le chemin optique entre le foyer objet et le plan P d'observation intermédiaire est toujours identique. Cette condition (aussi appelée stigmatisme rigoureux) se traduit par la formule suivante : Σnᵢ*eᵢ=constante, où eᵢ représente l'épaisseur de matériau traversé par la lumière le long d'un rayon lumineux, et nᵢ l'indice de réfraction associé. D'autre part, l'aberration de coma est corrigée à tous les ordres, si bien que la hauteur h entre le rayon émergent et l'axe optique H peut être définie par l'équation « h= f' sinα » avec f' désignant la focale de l'objectif et α désignant l'angle d'ouverture du rayon considéré.

De la sorte, le système selon l'invention permet de mesurer la BRDF, BTDF et BSDF d'une grande variété de surfaces diffusantes, des surfaces faiblement diffusantes à des surfaces fortement diffusantes selon l'angle d'ouverture considéré. Par ailleurs, la résolution des mesures est très bonne pour des petites ou des grandes tailles de surface étudiée telle que 2 mm de diamètre tout en proposant un système compact, sans parties en mouvement et avec un temps de mesure très court.

Selon un mode de réalisation de l'invention, la lentille de champ convergente est aplanétique de sorte à ce que la première conjugaison dans son ensemble soit aplanétique, de manière à améliorer la résolution du système optique et à délimiter proprement la surface effectivement mesurée de l'objet diffusant.

Selon un autre mode de réalisation, la lentille de champ convergente comprend au moins deux lentilles agencées de sorte que la lentille de champ convergente est aplanétique de sorte à simplifier la conception optique.

Selon une possibilité, la lentille de champ présente une épaisseur et une cambrure dont la valeur est supérieure à 10% de la focale de la lentille de champ convergente de sorte à pouvoir créer une courbure de champ négative et compenser la courbure de champ de l'objectif aplanétique. En effet, la courbure négative de la lentille de champ permet de compenser la courbure de champ positive de l'objectif aplanétique de sorte à corriger la deuxième conjugaison de la courbure de champ et améliorer la résolution angulaire pour de forts angles de diffusion.

En alternative, ne faisant pas partie de l'invention revendiquée, la lentille de champ convergente est une lentille simple, de type biconvexe ou plan-convexe, sphérique ou asphérique, de sorte de gagner en encombrement et en simplicité de réalisation mais dans ce cas, la deuxième conjugaison n'est pas corrigée des aberrations de champ, notamment la courbure de champ car sa courbure de champ est non contrôlée.

L'objectif aplanétique présente par exemple un angle d'ouverture dont une valeur absolue est comprise entre 0 et une valeur strictement inférieure à 90°, de préférence dont une valeur absolue est comprise entre 45° et une valeur strictement inférieure à 90°, et de préférence encore dont une valeur absolue est comprise entre 60° et une valeur strictement inférieure à 90, et encore de préférence dont une valeur absolue est comprise entre 85° et une valeur strictement inférieure à 90° de sorte à pouvoir observer des surfaces de diffusion très variées et notamment des surfaces très diffusantes.

Selon un mode de réalisation, l'objectif aplanétique comprend au moins une lentille asphérique, de préférence, l'objectif aplanétique comprend deux lentilles asphériques, et de préférence encore l'objectif aplanétique comprend deux lentilles asphériques dont chacune des surfaces présente un écart par rapport au rayon de courbure local mesuré au centre de sa surface, qui est supérieur ou égal à 10% de la distance focale de l'objectif aplanétique.

De ce fait, lorsque l'objectif aplanétique est ainsi constitué de deux lentilles fortement asphériques, son angle d'ouverture est très important. Ainsi, lorsque les première et deuxième conjugaisons sont corrigées des aberrations d'ouverture et de champ il est possible d'observer une surface étendue (2 mm par exemple) et d'avoir une bonne résolution angulaire en même temps qu'un encombrement réduit. De plus, l'image d'un diagramme d'intensité lambertien donne une distribution de lumière uniforme sur le capteur vidéo, ce qui maximise la dynamique. Par ailleurs, toute la lumière diffusée est récupérée par le capteur vidéo et il n'y a aucun vignettage ce qui permet de limiter les problèmes de sensibilité lors de la mesure de surface réfléchissante et/ou fonctionnant en transmission d'objets sombres. D'autre part, la surface apparente de l'objet vue par le capteur est toujours la même au cours d'une même mesure, quel que soit l'angle d'observation, de sorte que la surface est toujours identique au cours de la mesure. Enfin, la mesure aux forts angles d'incidence se fait avec une bonne résolution.

Dans l'alternative où l'objectif aplanétique est constitué d'une simple lentille asphérique, le coût et l'encombrement sont réduits, mais l'angle d'ouverture est limitée à +/- 45° ce qui limite la mesure à des surfaces peu diffusantes.

Selon une variante de réalisation, l'objectif aplanétique comprend au moins deux lentilles agencées de façon à corriger les aberrations d'ouverture de l'objectif aplanétique. Lesdites au moins deux lentilles peuvent être quelconques, sphériques ou asphériques, convergentes ou divergentes.

De façon avantageuse, l'objectif aplanétique présente une conjugaison de type foyer infini de sorte qu'il est possible de faire l'image d'un diagramme d'intensité situé à l'infini sur un plan P d'observation intermédiaire et de faire correspondre une direction du diagramme d'intensité avec un pixel du capteur vidéo.

Selon un autre mode de réalisation, l'objectif de prise d'image présente un angle de champ de +/- 20°.

Notamment l'objectif de prise d'image est un objectif de caméra.

Le capteur vidéo est par exemple choisi parmi un capteur de type CMOS ou de type CCD.

Par l'expression 'CCD' qui est l'acronyme anglais de *'Charge-Coupled Device',* on entend un dispositif à transfert de charge.

Par l'expression 'capteur vidéo de type CMOS' on entend un capteur à composants CMOS qui est l'acronyme anglais de *'Complementary Metal Oxide Semiconductor'.*

Selon un autre aspect, l'invention concerne également un dispositif de mesure des fonctions diffuses bidirectionnelles BRDF, BTDF et BSDF de d'une surface réfléchissante et/ou fonctionnant en transmission d'au moins une partie d'un objet comprenant : - un système optique tel que précédemment décrit, et
- une voie d'éclairage apte à éclairer la surface réfléchissante et/ou fonctionnant en transmission sous plusieurs angles d'incidence i, de sorte à pouvoir mesurer le diagramme d'intensité de la lumière diffusée par la surface réfléchissante et/ou fonctionnant en transmission sur le capteur vidéo.

Par l'expression 'voie d'éclairage' on entend la propagation des faisceaux lumineux depuis le jeu de source lumineuse jusqu'à au moins une partie de l'objet.

Avantageusement, le dispositif de mesure comporte des moyens de reconstitution des BRDF, BDTF et BSTF de la surface réfléchissante et/ou fonctionnant en transmission et des moyens d'enregistrement sur un support des mesures des BRDF, BDTF et BSTF.

Les moyens de reconstitution peuvent être un logiciel par exemple. Les moyens d'enregistrement permettent de constituer une bibliothèque de données des BRDF, BDTF et BSDF mesurées qui pourront être utilisées dans la création d'image de synthèse pour obtenir une reproduction fidèle de l'objet.

Selon un mode de réalisation particulier, le dispositif de mesure est adapté à mesurer des fonctions diffuses bidirectionnelles BRDF et la voie d'éclairage comprend :
- un jeu de sources lumineuses de faisceaux pré-collimatés,
- un jeu de lentilles convergentes agencé de façon à former l'image des sources lumineuses sur le plan P d'observation intermédiaire, et
- une lame semi-réfléchissante disposée au niveau du plan P d'observation intermédiaire de sorte que les faisceaux pré-collimatés sont réfléchis en direction d'au moins une partie de l'objet à travers l'objectif aplanétique tout en permettant le passage de la lumière diffusée depuis l'objet ou une partie de l'objet vers le capteur vidéo. En effet, en focalisant les faisceaux des sources lumineuses sur le plan P d'observation intermédiaire, il est possible d'adresser plusieurs angles d'incidence donnés.

D'autres aspects, buts et avantages de la présente invention apparaîtront mieux à la lecture de la description suivante d'un mode de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 illustre un schéma de principe du système optique selon un mode de réalisation de l'invention.
La figure 2 illustre un tracé de rayons à travers un objectif aplanétique et une lentille de champ, depuis un point source situé au centre de l'objet, jusqu'à l'objectif de prise d'images (conjugaison C1) selon un mode de réalisation de l'invention
La figure 3 illustre un tracé de rayons depuis le diagramme d'intensité jusqu'au capteur vidéo (conjugaison C2), avec les voies d'éclairages en superposition selon un mode de réalisation de l'invention.

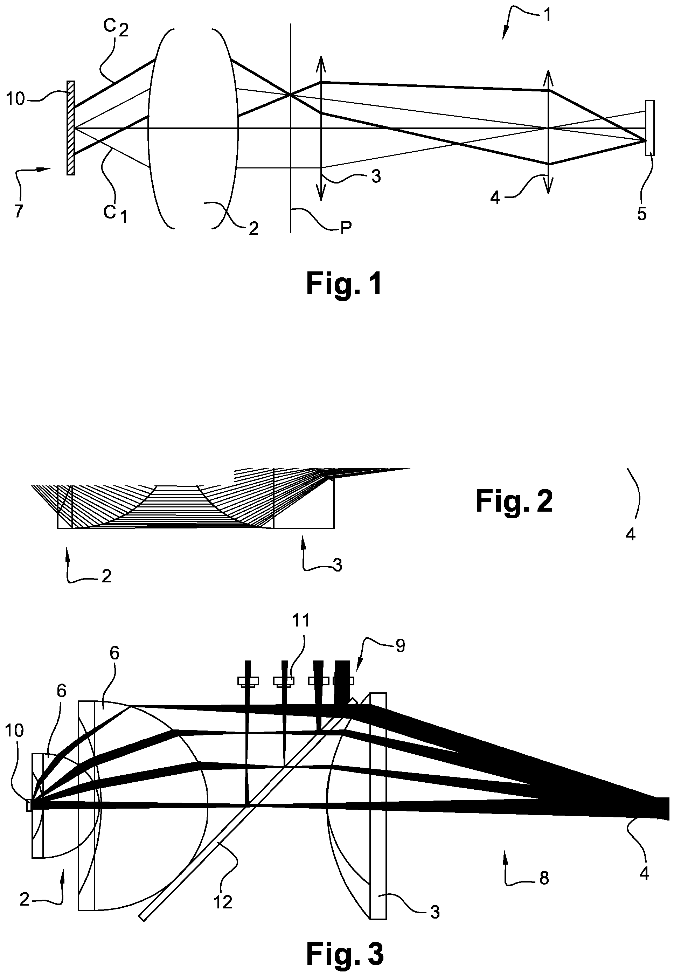

La figure 1 illustre un système optique 1 comprenant successivement un objectif aplanétique 2, une lentille de champ convergente 3, un objectif de prise d'image 4 et un capteur vidéo 5.

L'objectif sensiblement aplanétique 2, à savoir dont la résolution angulaire est comprise entre 1° et une valeur strictement supérieure à 0 ou à savoir un objectif 2 corrigé des aberrations d'ouverture (aberrations sphérique et de coma), présente une conjugaison de type à foyer infini. Il est doté par ailleurs d'un angle d'ouverture très important pouvant aller de 0 à une valeur proche de +/-90° de sorte à mesurer des surfaces peu ou très diffusantes. Pour ce faire, l'objectif aplanétique 2 est constitué de deux lentilles 6 asphériques. Il peut également être constitué d'une seule lentille 6 asphérique de sorte à réduire les coûts mais l'angle d'ouverture d'un tel objectif 2 est limité à +/-45°.

Lorsque l'objectif aplanétique 2 comprend deux lentilles 6 asphériques, leurs surfaces sont difficiles à déterminer, notamment pour des grands angles d'ouverture. Le paramétrage nécessite de résoudre un problème à deux équations (l'aberration sphérique et la coma) et quatre inconnues (les quatre surfaces optiques). En théorie, on ne peut donc définir que deux des quatre surfaces optiques. En pratique les deux surfaces libres sont ajustées de façon à obtenir une géométrie physiquement réalisable. Le calcul d'optimisation d'une géométrie prédéfinie (type polynôme ou conique) à l'aide d'un logiciel de calcul optique ne donne pas de résultats satisfaisants pour obtenir un objectif doté d'une bonne résolution aux angles d'ouvertures importants. Par contre, le calcul analytique permet de définir une équation différentielle qui peut être résolue numériquement par un logiciel et conduit à la définition complète de deux des quatre surfaces des lentilles 6 pour un objectif parfaitement aplanétique 2, sachant que les deux autres surfaces sont utilisées comme paramètres. Cette équation différentielle s'obtient par calcul analytique en partant des deux formules suivantes :
- Σnᵢ*eᵢ=constante, où eᵢ représente l'épaisseur de matériau traversé par la lumière le long d'un rayon lumineux, depuis le foyer objet jusqu'au plan d'observation intermédiaire P (correction de l'aberration sphérique), et nᵢ l'indice de réfraction associé.
- h=f'sinα avec f' désignant la focale de l'objectif, α désignant l'angle d'ouverture d'un rayon incident et h la hauteur entre le rayon émergent correspondant et l'axe optique H (correction de la coma).

Soient (x1,y1,x2,y2) les coordonnées des deux surfaces qui ne sont pas prises comme paramètre. En propageant un rayon lumineux à travers l'objectif depuis le foyer jusqu'au plan P d'observation intermédiaire, il est possible de reformuler les deux équations précédentes en introduisant les inconnues (x1,y1,x2,y2). Le résultat est un jeu d'équations couplées fonction de (x1,y1,x2,y2). L'une de ces équations est une équation différentielle qui se résoud numériquement, en utilisant un rayon d'angle d'ouverture 0° comme condition initiale.

Le cas de figure d'un objectif aplanétique constitué d'une lentille asphérique seule se traite de la même manière, mais cette fois il y a deux équations, deux inconnues et aucun paramètre laissé libre.

Selon une première conjugaison C1 réalisée par le système optique 1 (tracé de rayons le plus mince), la lumière diffusée par la surface 10 réfléchissante et/ou fonctionnant en transmission d'une partie de l'objet 7 se propage à travers l'objectif aplanétique 2. Ceci a pour effet qu'un diagramme d'intensité de la lumière diffusée est projeté sur un plan P d'observation intermédiaire situé en amont de la lentille de champ convergente 3. Cette lentille de champ 3 fait ensuite converger les faisceaux lumineux de cette image dans l'objectif de prise d'image 4. La lentille de champ convergente 3 est une lentille aplanétique de sorte à ce que la conjugaison C1 dans son ensemble soit aplanétique Alternativement, la lentille 3 peut être constituée d'une seule lentille de type condenseur asphérique pour limiter les coûts.

Selon une deuxième conjugaison C2 réalisée par le système optique 1 (tracé de rayons le plus large), une direction du diagramme d'intensité situé à l'infini vient correspondre à un pixel du capteur vidéo 5. Cette deuxième conjugaison C2 est corrigée des aberrations de courbure de champ induites par l'objectif aplanétique 2 grâce à une lentille de champ 3 dont l'épaisseur et la cambrure sont importantes. Elles sont en effet supérieures à 10% de la focale de la lentille. L'épaisseur et la cambrure de la lentille de champ 3 sont déterminées de manière à introduire une courbure de champ négative qui compense la courbure de champ positive de l'objectif aplanétique 2.

En référence à la figure 2, un tracé des rayons à travers l'objectif aplanétique 2 et la lentille de champ 3 illustre la première conjugaison C1. Le point source est situé au foyer objet de l'objectif aplanétique 2. Cette figure illustre notamment le plan P d'observation intermédiaire qui en réalité est courbe en raison des aberrations de champ de l'objectif aplanétique 2, qui sont corrigées de façon approchée par la courbure de champ négative de l'épaisse lentille de champ convergente 3.

En référence à la figure 3 est illustré un dispositif de mesure 8 de la BRDF. En plus du système optique 1 tel que précédemment décrit, le dispositif de mesure 8 comprend une voie d'éclairage 9 constituée d'un jeu de quatre sources lumineuses de faisceaux pré-collimatés, telles que des LEDs encapsulées de 3 mm, mais un nombre de sources lumineuses différent est possible. La figure 3 illustre quatre lentilles convergentes 11 correspondantes aux sources lumineuses de sorte à focaliser les faisceaux pré-collimatés sur le plan P d'observation intermédiaire grâce à une lame semi-réflechissante 12 intercalée entre l'objectif aplanétique 2 et la lentille de champ 3.

Ces lentilles convergentes 11 sont définies en tenant compte de la courbure plan P d'observation intermédiaire de sorte à ne pas dégrader la résolution angulaire dans la voie d'éclairage 9. La lumière se propage ainsi vers la surface 10 réfléchissante de la partie de l'objet 7 à mesurer. Puis la lumière diffusée par la surface 10 réfléchissante de l'objet 7 se propage depuis l'objet 7 jusqu'au capteur vidéo 5.

Selon un mode de réalisation non illustré, lorsque le dispositif de mesure 8 est appliqué à la mesure de la fonction BTDF, les sources lumineuses émettent des faisceaux collimatés en amont de la surface 10 fonctionnant en transmission. Ainsi, la surface 10 est éclairée avec des angles d'incidence i prédéterminés, chaque source lumineuse présentant une divergence de moins de 1° de façon à correspondre à la résolution angulaire du dispositif de mesure (8). Les angles d'incidences obtenus par le système aplanétique lorsque le dispositif de mesure 8 est utilisé pour mesurer la BRDF sont de la sorte également obtenus pour la mesure de la BTDF.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons.

## Revendications

1. Système optique (1), destiné à mesurer la fonction de réflexion et/ou de transmission diffuse bidirectionnelle BRDF (acronyme anglais bidirectional reflectance distribution function), BTDF (acronyme anglais bidirectional transmittance distribution function) et BSDF (acronyme anglais bidirectional scattering distribution function) d'une surface (10) réfléchissante et/ou fonctionnant en transmission d'au moins une partie d'un objet (7), le système comprenant successivement dans la direction de propagation de la lumière diffusée :
- un objectif aplanétique (2) apte à projeter l'image d'un diagramme d'intensité de la lumière diffusée par la surface (10) réfléchissante et/ou fonctionnant en transmission sur un plan P d'observation intermédiaire en aval de l'objectif aplanétique (2),
- une lentille de champ convergente (3) en aval du plan P,
- un objectif de prise d'image (4) dont l'angle de champ est supérieur ou égal à l'angle de convergence des faisceaux de la lumière diffusée émergeants de la lentille de champ, et
- un capteur vidéo (5),
l'objectif aplanétique (2), la lentille de champ convergente (3), l'objectif de prise d'image (4) et le capteur vidéo (5) étant agencés de sorte à permettre une première conjugaison C1 entre la surface (10) réfléchissante et/ou fonctionnant en transmission et la pupille d'entrée de l'objectif de prise d'image (4) et une deuxième conjugaison C2 entre un diagramme d'intensité de la lumière diffusée et le capteur vidéo (5),
**caractérisé en ce que**
l'objectif aplanétique (2) a une résolution angulaire comprise entre 10° et une valeur strictement supérieure à 0°, et comprend au moins deux lentilles agencées de façon à corriger les aberrations d'ouverture de l'objectif aplanétique (2), l'objectif aplanétique (2) présentant un angle d'ouverture dont la valeur absolue est comprise entre 60° et une valeur strictement inférieure à 90°, l'objectif aplanétique (2) comprenant au moins une lentille asphérique ;
la lentille de champ convergente (3) étant aplanétique, la première conjugaison étant alors aplanétique.

2. Système optique (1) selon la revendication 1, **caractérisé en ce que** l'objectif aplanétique (2) présente un angle d'ouverture dont la valeur absolue est comprise entre 85° et une valeur strictement inférieure à 90°.

3. Système optique (1) selon l'une des revendications 1 à 2, **caractérisé en ce que** l'objectif aplanétique (2) comprend deux lentilles asphériques, et de préférence l'objectif aplanétique (2) comprend deux lentilles asphériques dont chacune des surfaces présente un écart par rapport au rayon de courbure local mesuré au centre de sa surface, qui est supérieur ou égal à 10% de la distance focale de l'objectif aplanétique.

4. Système optique (1) selon l'une des revendications 1 à 3, **caractérisé en ce que** l'objectif aplanétique (2) présente une conjugaison de type foyer infini.

5. Dispositif de mesure (8) de la fonction de réflexion et/ou de transmission diffuse bidirectionnelle BRDF, BTDF et BSDF d'une surface (10) réfléchissante et/ou fonctionnant en transmission d'au moins une partie d'un objet (7) comprenant :
- un système optique (1) selon l'une des revendications 1 à 4
- une voie d'éclairage (9) apte à éclairer la surface (10) réfléchissante et/ou fonctionnant en transmission sous plusieurs angles d'incidence i.

6. Dispositif de mesure (8) selon la revendication 5, **caractérisé en ce qu'**il comporte des moyens de reconstitution de la BRDF, BDTF et BSTF de la surface (10) réfléchissante et/ou fonctionnant en transmission et des moyens d'enregistrement sur un support des mesures de la BRDF, BDTF et BSTF.

7. Dispositif de mesure (8) selon l'une des revendications 5 ou 6, **caractérisé en ce que** le dispositif de mesure (8) est adapté pour mesurer la fonction de réflexion diffuse bidirectionnelle BRDF et **en ce que** la voie d'éclairage (9) comprend :
- un jeu de sources lumineuses de faisceaux pré-collimatés,
- un jeu de lentilles convergentes (11) agencé de façon à focaliser les sources lumineuses sur le plan P d'observation intermédiaire, et
- une lame semi-réfléchissante (12) disposée au niveau du plan P d'observation intermédiaire de sorte que les faisceaux pré-collimatés sont réfléchis en direction d'au moins une partie de l'objet (7) à travers l'objectif aplanétique (2) tout en permettant le passage de la lumière diffusée depuis l'objet (7) ou une partie de l'objet (7) vers le capteur vidéo (5).

## Patentansprüche

1. Optisches System (1) zur Messung der bidirektionalen Reflexions- und/oder diffusen Übertragungsfunktion BRDF (englisches Akronym bidirectional reflectance distribution function), BTDF (englisches Akronym bidirectional transmittance distribution function) und BSDF (englisches Akronym bidirectional scattering distribution function) einer reflektierenden und/oder in Transmission arbeitenden Oberfläche (10) von mindestens einem Teil eines Objekts (7), das System, das nacheinander in Streulichtausbreitungsrichtung Folgendes umfasst:
- ein aplanatisches Objektiv (2), das in der Lage ist, das Bild eines Intensitätsdiagramms des von der reflektierenden und/oder in Transmission arbeitenden Oberfläche (10) gestreuten Lichts auf eine dem aplanatischen Objektiv (2) nachgeschaltete Zwischenbeobachtungsebene P zu projizieren,
- eine der Ebene P nachgeschaltete konvergierende Feldlinse (3),
- ein Bildaufnahmeobjektiv (4), dessen Feldwinkel größer oder gleich dem Konvergenzwinkel der aus der Feldlinse austretenden Streulichtstrahlen ist, und
- einen Videosensor (5),
das aplanatische Objektiv (2), die konvergierende Feldlinse (3), das Bildaufnahmeobjektiv (4) und der Videosensor (5) so angeordnet sind, dass eine erste Konjugation C1 zwischen der reflektierenden und/oder in Transmission arbeitenden Oberfläche (10) und der Eingangspupille des Bildaufnahmeobjektivs (4) und eine zweite Konjugation C2 zwischen einem Intensitätsdiagramm des gestreuten Lichts und dem Videosensor (5) möglich ist,
**dadurch gekennzeichnet, dass**
das aplanatische Objektiv (2) eine Winkelauflösung zwischen 10° und einem Wert strikt über 0° aufweist und mindestens zwei Linsen umfasst, die so angeordnet sind, dass sie die Öffnungsaberrationen des aplanatischen Objektivs (2) korrigieren,
das aplanatische Objektiv (2) mit einem Öffnungswinkel, dessen absoluter Wert zwischen 60° und einem Wert strikt unter 90° liegt, wobei das aplanatische Objektiv (2) mindestens eine asphärische Linse umfasst,
wobei die konvergierende Feldlinse (3) aplanatisch ist, wobei die erste Konjugation dann aplanatisch ist.

2. Optisches System (1) nach Anspruch 1, **dadurch gekennzeichnet, dass** das aplanatische Objektiv (2) einen Öffnungswinkel aufweist, dessen absoluter Wert zwischen 85° und einem Wert strikt unter 90° liegt.

3. Optisches System (1) nach einem der Ansprüche 1 bis 2, **dadurch gekennzeichnet, dass** das aplanatische Objektiv (2) zwei asphärische Linsen umfasst, und vorzugsweise das aplanatische Objektiv (2) zwei asphärische Linsen umfasst, deren Oberflächen jeweils einen Abstand zum lokalen Krümmungsradius aufweisen, der in der Mitte ihrer Oberfläche gemessen wird, der größer oder gleich 10 % der Brennweite des aplanatischen Objektivs ist.

4. Optisches System (1) nach einem der Ansprüche 1 bis 3, **dadurch gekennzeichnet, dass** das aplanatische Objektiv (2) eine unendliche Brennpunktkonjugation aufweist.

5. Messvorrichtung (8) für die bidirektionale Reflexions- und/oder diffuse Übertragungsfunktion BRDF, BTDF und BSDF einer reflektierenden und/oder in Transmission arbeitenden Oberfläche (10) von mindestens einem Teil eines Objekts (7), umfassend:
- ein optisches System (1) nach einem der Ansprüche 1 bis 4
- ein Beleuchtungspfad (9), der in der Lage ist, die reflektierende und/oder in Transmission arbeitende Oberfläche (10) unter mehreren Einfallswinkeln i auszuleuchten.

6. Messvorrichtung (8) nach Anspruch 5, **dadurch gekennzeichnet, dass** sie Mittel zur Wiederherstellung der BRDF, BDTF und BSTF der reflektierenden und/oder in Transmission arbeitenden Oberfläche (10) und Mittel zur Aufzeichnung auf einem Träger der BRDF-, BDTF- und BSTF-Messungen umfasst.

7. Messvorrichtung (8) nach einem der Ansprüche 5 oder 6, **dadurch gekennzeichnet, dass** die Messvorrichtung (8) zum Messen der bidirektionalen diffusen Reflexionsfunktion BRDF geeignet ist und dass der Beleuchtungspfad (9) Folgendes umfasst:
- eine Reihe von Lichtquellen mit vorkollimierten Strahlen,
- einen Satz konvergenter Linsen (11), der so angeordnet ist, dass die Lichtquellen auf die Zwischenbeobachtungsebene P fokussiert werden, und
- eine halbreflektierende Klinge (12), die auf Höhe der Zwischenbeobachtungsebene P so angeordnet ist, dass die vorkollimierten Strahlen in Richtung mindestens eines Teils des Objekts (7) durch das aplanatische Objektiv (2) reflektiert werden und gleichzeitig den Durchgang des vom Objekt (7) oder einem Teil des Objekts (7) zum Videosensor (5) gestreuten Lichts ermöglichen.

## Claims

1. An optical system (1), intended to measure the bidirectional reflectance and/or transmittance distribution function BRDF (bidirectional reflectance distribution function), BTDF (bidirectional transmittance distribution function) and BSDF (bidirectional scattering distribution function) of a surface (10), reflecting and/or operating in transmission, of at least part of an object (7), the system comprising successively in the direction of propagation of the diffused light:
- an aplanatic objective (2) capable of projecting the image of an intensity diagram of the light diffused by the surface (10), reflecting and/or operating in transmission, onto an intermediate observation plane P downstream of the aplanatic objective (2),
- a converging field lens (3) downstream of the plane P,
- an image pickup objective (4) whose field angle is greater than or equal to the convergence angle of the beams of the diffused light emerging from the field lens, and
- a video sensor (5),
the aplanatic objective (2), the converging field lens (3), the image pickup objective (4) and the video sensor (5) being arranged so as to allow a first conjugation C1 between the surface (10), reflecting and/or operating in transmission, and the entrance pupil of the image pickup objective (4) and a second conjugation C2 between an intensity diagram of the diffused light and the video sensor (5),
**characterized in that**
the aplanatic objective (2) has an angular resolution comprised between 10° and a value strictly greater than 0°, and comprises at least two lenses arranged so as to correct the aperture aberrations of the aplanatic objective (2), the aplanatic objective (2) having an aperture angle whose absolute value is comprised between 60° and a value strictly less than 90°, the aplanatic objective (2) comprising at least one aspherical lens;
the converging field lens (3) being aplanatic, the first conjugation then being aplanatic.

2. The optical system (1) according to claim 1, **characterized in that** the aplanatic objective (2) has an aperture angle whose absolute value is comprised between 85° and a value strictly less than 90°.

3. The optical system (1) according to any of claims 1 and 2, **characterized in that** the aplanatic objective (2) comprises two aspherical lenses, and preferably the aplanatic objective (2) comprises two aspherical lenses each of whose surfaces has a deviation from the local radius of curvature measured at the center of its surface, which is greater than or equal to 10% of the focal length of the aplanatic objective.

4. The optical system (1) according to any of claims 1 to 3, **characterized in that** the aplanatic objective (2) has a conjugation of infinite focus type.

5. A measuring device (8) of the bidirectional reflectance and/or transmittance distribution function BRDF, BTDF and BSDF of a surface (10), reflecting and/or operating in transmission, of at least part of an object (7) comprising:
- an optical system (1) according to any of claims 1 to 4
- an illumination path (9) capable of illuminating the surface (10), reflecting and/or operating in transmission, under several angles of incidence i.

6. The measuring device (8) according to claim 5, **characterized in that** it includes means for reconstructing the BRDF, BDTF and BSTF of the surface (10), reflecting and/or operating in transmission, and means for recording on a medium the measurements of the BRDF, BDTF and BSTF.

7. The measuring device (8) according to any of claims 5 or 6, **characterized in that** the measuring device (8) is adapted to measure the bidirectional reflectance distribution function BRDF and **in that** the illumination path (9) comprises:
- a set of light sources of pre-collimated beams,
- a set of converging lenses (11) arranged so as to focus the light sources on the intermediate observation plane P, and
- a semi-reflecting blade (12) disposed at the intermediate observation plane P so that the pre-collimated beams are reflected in the direction of at least part of the object (7) through the aplanatic objective (2) while allowing the passage of the light diffused from the object (7) or part of the object (7) towards the video sensor (5).
